# EUROPÄISCHE PATENTSCHRIFT

(11) **EP 2 201 874 B1**
(45) Veröffentlichungstag und Bekanntmachung des Hinweises auf die Patenterteilung: **29.06.2016**
(21) Anmeldenummer: 09176470.4
(22) Anmeldetag: 19.11.2009
(51) Int. Cl.: A47L 9/14, B01D 39/16, A47L 5/24

(54) **Staubsaugerbeutel und Staubsauger**
Vacuum cleaner bag and vacuum cleaner
Sac d'aspirateur et aspirateur

(30) Priorität: 17.12.2008 DE 202008016669 U
(43) Veröffentlichungstag der Anmeldung: 30.06.2010
(73) Patentinhaber: Wolf PVG GmbH & Co. KG, 32602 Vlotho-Exter (DE)
(72) Erfinder: Czado, Wolfgang, Dr., 32427 Minden (DE)
(74) Vertreter: Dantz, Jan Henning

(56) Entgegenhaltungen:
- EP-A2- 0 960 645
- EP-A2- 1 982 626
- DE-U1-202007 014 263
- DE-U1-202007 018 375

## Beschreibung

Die vorliegende Erfindung betrifft einen Staubsaugerbeutel, insbesondere für einen Akku-Sauger, und einen Staubsauger.

Es sind Staubsaugerbeutel bekannt, die ein Filtermaterial mit mehreren Lagen besitzen, um einen guten Abscheidegrad zu erreichen. Als Filtermaterial werden meist Vliesstoffe mit einer Meltblowlage zur Feinfiltration eingesetzt, die an einer Stützschicht, beispielsweise aus einem Spunbond verbunden ist. Zudem können auch weitere Schichten aus Spunbond, einem Netz- oder Gittergelege, perforierte Folien oder weitere Vliesschichten, beispielsweise aus einem Krempelvlies, mit Fasern aus PP, PES, PA, Viskose, Elektretfaser oder Mischungen daraus, vorgesehen sein. Zudem gibt es Airlaidschichten aus Pulp oder Mischungen aus Pulp und Bikomponenten-Fasern und anderen Schichten. Bei diesen Filtermaterialien wird zur Feinfiltration mindestens eine Meltblowlage vorgesehen, die ein Flächengewicht zwischen 5 bis 60 g/m², vorzugsweise etwa 20 bis 30 g/m² aufweist und damit eine Staubemission von weniger als 1 mg/m² gemäß DIN EN 60 312 erreicht. Solche mehrlagigen Filterschichten können für Staubsauger eingesetzt werden, die eine hohe Saugleistung besitzen und daher einen Saugvolumenstrom von meist 110 bis 180 m³ pro Stunde erzeugen können. Dadurch wird sichergestellt, dass auch der hohe Strömungswiderstand der Filterschichten durchströmt wird.

Problematisch bei den bekannten Staubsaugerbeuteln ist, dass diese sich nicht für Geräte mit geringerer Leistung eignen, insbesondere können sogenannte Akku-Sauger solche Staubsaugerbeutel nicht nutzen. Denn Akku-Sauger kommen ohne externe Stromversorgung aus, und müssen mit Stromspeichern, meist in Form von Batterien, arbeiten. Dadurch können nur geringere Saugleistungen bereitgestellt werden, so dass nur ein geringerer Volumenstrom erzeugt werden kann. Die führt dazu, dass die bekannten Staubsaugerbeutel bei Akku-Saugern einen zu hohen Strömungswiderstand besitzen und nicht eingesetzt werden können.

Das Dokument DE 20 2007 018375 U1 beschreibt ein mehrlagiges Filtermaterial für Staubsaugerbeutel, wobei die ausserste Schicht aus Spunbond sein kann.

Es ist daher Aufgabe der vorliegenden Erfindung, einen Staubsaugerbeutel zu schaffen, der einen hohen Abscheidegrad aufweist und auch bei einem Akku-Sauger eingesetzt werden kann.

Diese Aufgabe wird mit einem Staubsaugerbeutel mit den Merkmalen des Anspruches 1 gelöst.

Erfindungsgemäß umfasst der Staubsaugerbeutel ein Filtermaterial, das eine Luftdurchlässigkeit von mehr als 500 1/m² x s und eine Staubemission nach DIN EN 60 312 von weniger als 1 mg Staub bei einem Luftvolumenstrom von weniger als 60 m³/h, insbesondere weniger als 80 m³/h, aufweist, und mindestens eine als Stützschicht ausgebildete Lage und eine Vorfiltrationslage aufweist. Dadurch ist gewährleistet, dass eine relativ hohe Luftdurchlässigkeit vorhanden ist und der Staubsaugerbeutel auch für Akku-Sauger mit geringer Leistung eingesetzt werden kann. Trotz der geringeren Saugleistung ist der Abscheidegrad hoch und die Staubemission mit weniger als 0,5 mg Staub äußerst gering. Damit kann ein Akku-Sauger mit einem solchen Staubsaugerbeutel in Wettbewerb zu einem netzbetriebenen Gerät treten.

Gemäß einer bevorzugten Ausgestaltung der Erfindung weist das Filtermaterial des Staubsaugerbeutels eine Luftdurchlässigkeit von mehr als 700 1/m² x s, insbesondere mehr als 1.000 1/m² x s auf. Durch den geringen Luftwiderstand kann der Staubsaugerbeutel auch bei Akku-Saugern eingesetzt werden, mit denen nur eine relativ kleine Saugleistung erreicht werden kann.

Es hat sich überraschenderweise gezeigt, dass trotz einer hohen Luftdurchlässigkeit ein relativ guter Abscheidegrad erreicht werden kann, auch wenn bei dem Staubsaugerbeutel ein Filtermaterial eingesetzt wird, das keine Meltblowschicht aufweist. Hierfür wird gemäß der Erfindung ein Filtermaterial eingesetzt, das mindestens eine Lage Spunbond aufweist. Die Lage aus Spunbond kann dabei ein Flächengewicht von mehr als 30 g/m² besitzen und eine Luftdurchlässigkeit von mehr als 500 l/m² x s. Dadurch kann trotz des Verzichts auf die Lage aus Meltblow eine gute Staubfilterung erhalten werden.

Statt der Lage aus Spunbond oder zusätzlich kann das Filtermaterial eine Lage aus chemisch oder thermisch verfestigtem Krempelvlies aufweisen. Die Lage aus Krempelvlies kann dabei als Vorfiltrationslage eingesetzt werden und zudem kann eine Lage aus Spunbond als Stützschicht vorgesehen sein. Das Krempelvlies kann dabei ein Flächengewicht zwischen 5 bis 150 g/m², insbesondere 25 bis 80 g/m² aufweisen und aus Fasern aus PP, PES, PA, Viskose, Elektretfasern oder Mischungen daraus bestehen.

Gemäß einer weiteren Ausgestaltung der Erfindung umfasst das Filtermaterial eine Lage aus Airlaid, das aus Pulp, Mischungen aus Pulp und bikomponenten Fasern, oder anderen Verfestigungsmitteln besteht, so wie unverfestigten oder teilverfestigten Spinnvliesstoffen, Glas- oder Mineralwolle.

Das Filtermaterial kann zudem eine Lage Spunbond aufweisen, auf der eine Lage Spinnvlies angeordnet ist. Die beiden Lagen können über einen thermischen Kalander miteinander verbunden werden. Der thermische Kalander kann dabei bei geringem Anpressdruck von 10 bis 30 N/cm² für ein PP-Vlies die Lagen Spunbond teilweise miteinander verbinden, wobei durch den geringen Druck der Kern des Spinnvlieses des Spunbondes unverfestigt und somit watteartig erhalten bleibt. Dadurch kann eine solche Doppellage aus Spunbond und Spinnvlies auf besonders einfache Art und Weise ein Filtermaterial ausbilden, das eine Stütz- und Filterschicht umfasst.

In einer weiteren Ausgestaltung der Erfindung kann das Filtermaterial eine Lage aus Krempelvlies zwischen zwei Lagen aus Spunbond aufweisen. Das Krempelvlies kann dabei ein Flächengewicht von etwa 40 g/m² aufweisen, das zwischen zwei Lagen Spunbond mit einem niedrigen Flächengewicht von jeweils etwa 15 g/m² eingebunden ist. Zusätzlich kann eine weitere Lage aus Spunbond mit einem höheren Flächengewicht, insbesondere zwischen 40 und 60 g/m² als Vorfiltermaterial eingesetzt werden. Ein solcher Filtermaterialaufbau weist hervorragende Saugleistungs- und Filtereigenschaften gemäß DIN EN 69 312 auf.

Um eine Beschädigung des Filtermaterials durch abrasive Stäube, spitze Gegenstände, insbesondere Nägel oder Scherben zu vermeiden, ist vorzugsweise auf einer zur Einlassöffnung gegenüberliegenden Seite eine zusätzliche Materiallage angebracht. Diese Materiallage kann als Schutzschicht dienen und beispielsweise aus einem Netz, Gittergelege, einer peuforierten oder geschlitzten Folie oder anderen Materialien bestehen.

Ferner wird ein Staubsauger bereitgestellt, der einen geräteseitigen Stromspeicher, insbesondere eine wiederaufladbare Batterie, mittels dem ein Sauggebläse angetrieben ist, aufweist. Ein solcher Akku-Sauger umfasst eine Kammer in die ein erfindungsgemäßer Staubsaugerbeutel eingefügt ist. Dadurch kann auch mit einem Akku-Sauger eine effektive Reinigung vorgenommen werden.

Die Erfindung wird nachfolgend anhand eines Ausführungsbeispiels mit Bezug auf die beigefügten Zeichnungen näher erläutert. Es zigen:
- Figur 1: eine Grafik zur Saugleistung eines erfindungsgemäßen Staubsaugerbeutels,
- Figur 2: eine Grafik zur Filterleistung eines erfindungsgemäßen Staubsaugerbeutels.

Ein Staubsaugerbeutel für einen Akku-Sauger wird aus einem Filtermaterial hergestellt, das eine Lage Spunbond mit 50 g/m² Flächengewicht aufweist. Als Vorfiltermaterial wird ein Krempelvlies mit einem Flächengewicht von 40 g/m² aus Elektretfasern eingesetzt, das zwischen zwei Lagen Spunbond mit niedrigen Flächengewichten von etwa 15 g/m² eingebunden ist.

Der Staubsaugerbeutel aus diesem Filtermaterial wurde auf die Filtrationseigenschaften nach DIN EN 60 312 mit einem Gerät Miele Performance 2300, Leistungsstufe 600 Watt, getestet. Dabei wurde zum Vergleich ein Serienbeutel FJM getestet, der für einen netzbetriebenen Staubsauger vorgesehen ist.

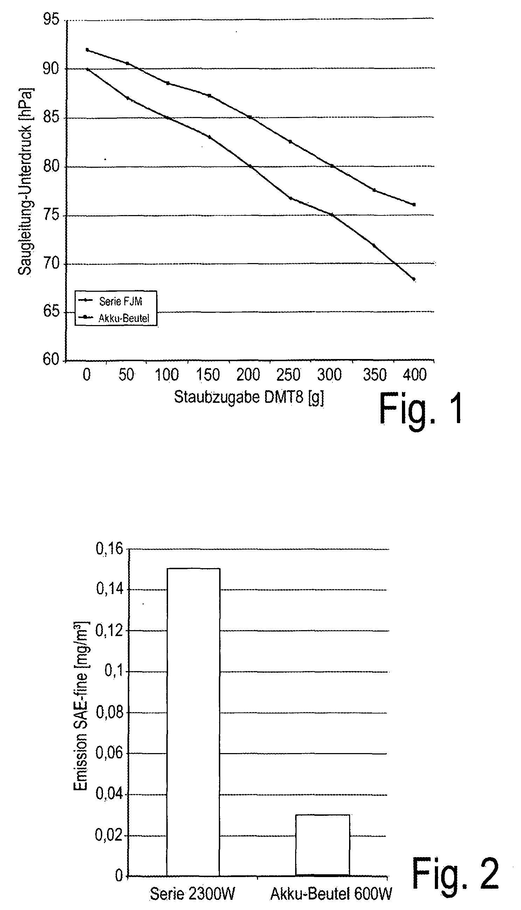

Das Ergebnis der Messung der Saugleistung bei zunehmender Befüllung ist in Figur 1 dargestellt. Es ist klar zu erkennen, dass trotz des Fehlens einer Meltblowschicht die Filtrationseigenschaften des Staubsaugerbeutels hervorragend sind.

In Figur 2 ist eine Grafik dargestellt, die eine Messung der Filterleistung gemäß DIN EN 60 312 mit einem Gerät Miele Performance 2300 zeigt. Einerseits wurde ein Serienstaubbeutel bei einer Leistungsstufe von 2300 Watt vermessen und andererseits wurde der erfindungsgemäße Staubsaugerbeutel bei einer Leistungsstufe von 600 Watt gemessen. Es ist deutlich sichtbar, dass der erfindungsgemäße Staubsaugerbeutel zwar bei geringerer Leistung betrieben wird, aber einen äußerst hohen Abscheidegrad aufweist.

## Patentansprüche

1. Staubsaugerbeutel, insbesondere für einen Akku-Sauger, mit einem Filtermaterial, das eine Luftdurchlässigkeit von mehr als 500 1/m² x s und eine Staubemission nach DIN EN 60 312 von weniger als 1 mg Staub bei einem Luftvolumenstrom von weniger als 60 m³/h, aufweist, und mindestens eine als Stützschicht ausgebildete Lage und eine Vorfiltrationslage aufweist, wobei das Filtermaterial mindestens eine Lage Spunbond aufweist.

2. Staubsaugerbeutel nach Anspruch 1, **dadurch gekennzeichnet, dass** das Filtermaterial eine Luftdurchlässigkeit von mehr als 700 1/m² x s , insbesondere mehr als 1.000 1/m² x s aufweist.

3. Staubsaugerbeutel nach Anspruch 1 oder 2, **dadurch gekennzeichnet, dass** die Lage aus Spunbond ein Flächengewicht von mehr als 30 g/m² aufweist.

4. Staubsaugerbeutel nach einem der Ansprüche 1 bis 3, **dadurch gekennzeichnet, dass** das Filtermaterial eine Lage eines chemisch oder thermisch verfestigten Krempelvlieses enthält.

5. Staubsaugerbeutel nach einem der Ansprüche 1 bis 4, **dadurch gekennzeichnet, dass** eine Lage des Krempelvlieses als Vorfiltrationslage und eine Lage aus Spunbond als Stützschicht vorgesehen ist.

6. Staubsaugerbeutel nach Anspruch 4 oder 5, **dadurch gekennzeichnet, dass** das Krempelvlies ein Flächengewicht zwischen 5 bis 150 g/m², vorzugsweise zwischen 25 bis 80 g/m² aufweist.

7. Staubsaugerbeutel nach einem der Ansprüche 4 bis 6, **dadurch gekennzeichnet, dass** das Krempelvlies auf Fasern aus PP, PES, PA, Viskose, Elekret- und/oder dauerhaft elektrostatisch aufgeladenen Fasern oder Mischungen daraus besteht.

8. Staubsaugerbeutel nach einem der Ansprüche 1 bis 7, **dadurch gekennzeichnet, dass** eine Lage aus einem Airlaid, insbesondere aus Pulp oder Mischungen aus Pulp und bikomponenten Fasern und/oder unverfestigten oder teilverfestigten Spinnvliesstoffen, Glas- oder Mineralwolle, vorgesehen ist.

9. Staubsaugerbeutel nach einem der Ansprüche 1 bis 8, **dadurch gekennzeichnet, dass** eine Lagen aus Spunbond als Stützschicht vorgesehen ist, auf die eine Lage auf Spinnvlies als Vorfiltrationslage abgelegt ist.

10. Staubsaugerbeutel nach Anspruch 9, **dadurch gekennzeichnet, dass** die beiden Lagen thermisch oder chemisch miteinander verbunden sind.

11. Staubsaugerbeutel nach einem der Ansprüche 1 bis 10, **dadurch gekennzeichnet, dass** eine Lage aus Krempelvlies zwischen zwei Lagen aus Spunbond eingebunden ist.

12. Staubssaugerbeutel nach einem der Ansprüche 1 bis 11, **dadurch gekennzeichnet, dass** an dem Staubsaugerbeutel eine Einströmöffnung angeordnet ist und an dem Filtermaterial auf der zur Einströmöffnung gegenüberliegenden Seite eine zusätzliche Materiallage als Prallschutz vorgesehen ist.

13. Staubsauger mit einem geräteseitigen Stromspeicher, insbesondere eine wiederaufladbare Batterie, mittels dem ein Sauggebläse angetrieben ist, und einer Kammer mit einem Staubsaugerbeutel nach einem der vorhergehenden Ansprüche.

## Claims

1. Vacuum cleaner bag, particularly for a battery-powered vacuum cleaner, with a filter material, which has an air permeability of more than 500 I/m² x s and dust emission in accordance with DIN EN 60 312 of less than 1 mg dust at an air volume flow of less than 60 m³/h and which comprises at least one layer, which is constructed as a supporting layer, and a pre-filtration layer, wherein the filter material comprises at least one layer of spunbonded material.

2. Vacuum cleaner bag according to claim 1, **characterised in that** the filter material has an air permeability of more than 700 l/m² x s, particularly more than 1,000 l/m² x s.

3. Vacuum cleaner bag according to claim 1 or 2, **characterised in that** that the layer of spunbonded material has an area weight of more than 30 g/m².

4. Vacuum cleaner bag according to any one of claims 1 to 3, **characterised in that** the filter material includes a layer of chemically or thermally compacted carded non-woven material.

5. Vacuum cleaner bag according to any one of claims 1 to 4, **characterised in that** the layer of carded non-woven material is provided as pre-filtration layer and a layer of spunbonded material is provided as supporting layer.

6. Vacuum cleaner bag according to claim 4 or claim 5, **characterised in that** the carded non-woven material has an area weight between 5 to 150 g/m², preferably between 25 to 80 g/m².

7. Vacuum cleaner bag according to any one of claims 4 to 6, **characterised in that** the carded non-woven material consists of fibres of PP, PES, PA, viscose, electret fibres and/or permanently electrostatically charged fibres or mixtures thereof.

8. Vacuum cleaner bag according to any one of claims 1 to 7, **characterised in that** a layer of an air-laid material, particularly of pulp or mixtures of pulp and bi-component fibres and/or non-hardened or partly hardened directly spunbonded non-woven materials, fibreglass wool or mineral wool.

9. Vacuum cleaner bag according to any one of claims 1 to 8, **characterised in that** a layer of spunbonded material is provided as supporting layer, on which a layer of spunbonded non-woven material is deposited as pre-filtration layer.

10. Vacuum cleaner bag according to claim 9, **characterised in that** the two layers are thermally or chemically connected together.

11. Vacuum cleaner bag according to any one of claims 1 to 10, **characterised in that** a layer of carded non-woven material is incorporated between two layers of spunbonded material.

12. Vacuum cleaner bag according to any one of claims 1 to 11, **characterised in that** an inflow opening is arranged at the vacuum cleaner bag and an additional material layer as impact protection is provided at their filter material on the side opposite the inflow opening.

13. Vacuum cleaner with an on-board energy store, particularly a rechargeable battery, by means of which a suction fan is operated, and a chamber with a vacuum cleaner bag according to any one of the preceding claims.

## Revendications

1. Sac d'aspirateur destiné en particulier à un aspirateur à accumulateur comprenant un matériau filtrant ayant une perméabilité à l'air supérieure à 500 1 / m² x s et une émission de poussière conformément à la norme DIN EN 60 312 inférieure à 1 mg de poussière pour un débit d'air inférieur à 60 m³/h, et comporte au moins une couche réalisée en tant que couche d'appui et une couche de pré-filtration, le matériau filtrant comprenant au moins une couche de matériau filé-lié.

2. Sac d'aspirateur conforme à la revendication 1,
**caractérisé en ce que**
le matériau filtrant a une perméabilité à l'air supérieure à 700 1/m² x s; en particulier supérieure à 1.000 1/m² x s.

3. Sac d'aspirateur conforme à la revendication 1 ou 2,
**caractérisé en ce que**
la couche de matériau filé-lié a un grammage supérieur à 30 g/m².

4. Sac d'aspirateur conforme à l'une des revendications 1 à 3,
**caractérisé en ce que**
le matériau filtrant renferme une couche de voile de carde durcie chimiquement ou thermiquement.

5. Sac d'aspirateur conforme à l'une des revendications 1 à 4,
**caractérisé en ce qu'**
il est prévu une couche de voile de carde en tant que couche de pré-filtration et une couche de matériau filé-lié en tant que couche-support.

6. Sac d'aspirateur conforme à la revendication 4 ou 5,
**caractérisé en ce que**
le voile de carde a un grammage compris entre 5 et 150 g/m², de préférence compris entre 25 à 80

7. Sac d'aspirateur conforme à l'une des revendications 4 à 6,
**caractérisé en ce que**
le voile de carde est constitué de fibres en PP, PES, PA, viscose, électret et/ou de fibres électro-statiquement chargées en permanence, ou de mélanges de telles fibres.

8. Sac d'aspirateur conforme à l'une des revendications 1 à 7,
**caractérisé en ce qu'**
il est prévu une couche appliquée par jet d'air en particulier à base de pulpe ou de mélanges de pulpe et de fibres bicomposants et/ou de matériau non tissé filé-lié non durci ou partiellement durci de laine de verre ou de laine minérale.

9. Sac d'aspirateur conforme à l'une des revendications 1 à 8,
**caractérisé en ce qu'**
il est prévu en tant que couche-support une couche de matériau filé-lié sur laquelle est appliqué une couche de matériau non tissé filé-lié en tant que couche de préfiltration.

10. Sac d'aspirateur conforme à la revendication 9,
**caractérisé en ce que**
les deux couches sont liées thermiquement ou chimiquement entre elles.

11. Sac d'aspirateur conforme à l'une des revendications 1 à 10,
**caractérisé en ce qu'**
une couche de voile de carde est insérée entre deux couches de matériau filé-lié.

12. Sac d'aspirateur conforme à l'une des revendications 1 à 11,
**caractérisé en ce qu'**
il comporte une ouverture d'entrée d'un flux, et il est prévu une couche de matériau supplémentaire faisant office de couche de protection anti-impact sur le côté du matériau filtrant opposée à l'ouverture d'entrée.

13. Aspirateur comprenant du côté de l'appareil un accumulateur de courant, en particulier une batterie rechargeable entraînant un ventilateur aspirant et une chambre équipée d'un sac d'aspirateur conforme à l'une des revendications précédentes.
